# EUROPEAN PATENT SPECIFICATION

(11) **EP 2 759 904 B1**
(45) Date of publication and mention of the grant of the patent: **08.09.2021**
(21) Application number: 13794534.1
(22) Date of filing: 04.01.2013
(51) Int. Cl.: G06F 1/26

(54) **ELECTRIC POWER CONTROL MODULE, APPARATUS AND DEVICE**
ELEKTRISCHES STEUERMODUL, VORRICHTUNG UND VERFAHREN
MODULE DE COMMANDE D'ALIMENTATION ÉLECTRIQUE, APPAREIL ET DISPOSITIF

(30) Priority: 22.05.2012 CN 201210160301
(43) Date of publication of application: 30.07.2014
(60) Divisional application: 21185779.2
(73) Proprietor: Huawei Device Co., Ltd., Dongguan, Guangdong 523808 (CN)
(72) Inventor: XU, Shunhai, Shenzhen, Guangdong 518129 (CN)
(74) Representative: Goddar, Heinz J.
(86) International application number: PCT/CN2013/070022
(87) International publication number: WO 2013/174151

(56) References cited:
- WO-A1-2008/146073
- CN-A- 101 588 079
- CN-U- 202 014 112
- US-A1- 2005 039 060
- US-A1- 2005 057 223
- US-A1- 2005 144 495
- US-A1- 2006 103 353
- US-B1- 6 211 649

## Description

### TECHNICAL FIELD

The present invention relates to the circuit field, and in particular, to an electric energy control module, apparatus and device.

### BACKGROUND

At present, a USB interface is widely used as one of primary interfaces for communications between devices. Accordingly, simultaneously implementing, by using a USB interface, functions of charging a device power source and supplying power by the device power source to an external device becomes a development trend. For example, some USB wireless network cards, USB wireless modems, and the like all can use USB interfaces for charging and supplying power.

In the prior art, a charging unit for charging a device power source and a power supply unit for supplying power to an external device are generally packaged on a main board of a device.

The prior art has the following disadvantages: the inventor finds that a main board of a device in the prior art generates a large amount of heat, which causes temperature increase of the device and impacts performance of the device.

US 2006/0103353 A1 describes a charge system comprising an electric apparatus that comprises a first rechargeable battery and an adapter for supplying power to the first rechargeable battery, and a charger for connecting to the electric apparatus and charging a second rechargeable battery. The electric apparatus and the charger are connected to each other through an USB port. The charger has a charging and a discharging mode.

### SUMMARY

In view of this, a technical problem to be solved in the present invention is to provide an electric energy control module, an apparatus and a device, so that an impact of heat generated by a main board on a temperature of a device can be reduced and performance of the device can be improved.

The invention is defined by the appended independent claims. Especially advantageous embodiments of the invention are indicated in the dependent claims.

Technical effects of the foregoing technical solutions are analyzed as follows:

The detection control unit is configured to detect a connection status of the first interface, and control switch statuses of the first switch and the second switch according to the connection status of the first interface. The power supply unit is disposed outside a device and is connected to the first interface by using the second interface only when power needs to be supplied to the external device. The power supply unit receives the electric energy output by the power source unit and supplies power to the external device, which can reduce heat generated by a main board, thereby alleviating an impact on a temperature of the device and improving performance of the device.

### BRIEF DESCRIPTION OF DRAWINGS

FIG. 1 is a schematic structural diagram of an electric energy control apparatus according to an embodiment of the present invention;
FIG. 2 shows an example of an implementation structure of a first module according to an embodiment of the present invention; and
FIG. 3 shows an example of an implementation structure of a second module.

### DESCRIPTION OF EMBODIMENTS

The inventor finds that in the prior art, a charging unit and a power supply unit are both packaged on a main board of a device. However, switching needs to be performed between the charging unit and the power supply unit; therefore a large amount of heat is inevitably generated due to such switching, and heat is also inevitably generated during operation of the charging unit and the power supply unit, which is one of reasons for a large amount of heart generated by a main board in the prior art.

According to the foregoing, a charging unit and a power supply unit are separate, rather than being both disposed on a main board of a device, which reduces a source of generating heat on the main board, reduces heat generated by the main board, and extends a service life of the main board.

The following describes in detail implementation of an electric energy control apparatus and device with reference to the accompanying drawings.

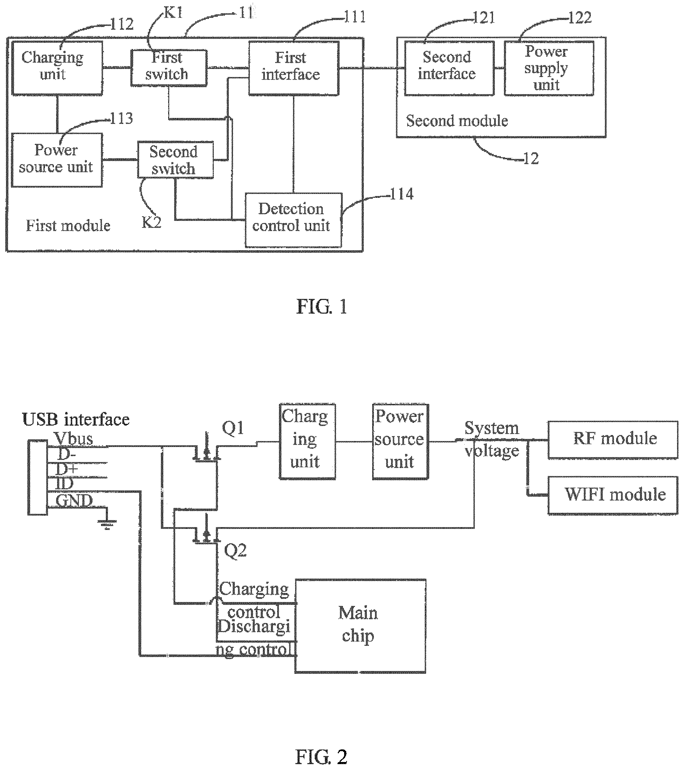

FIG. 1 is a schematic structural diagram of an electric energy control apparatus. As shown in FIG. 1, the apparatus includes a first module 11 and a second module 12, where
the first module 11 includes a first interface 111, the second module 12 includes a second interface 121, and the first module 111 and the second module 121 are detachably connected interfaces that cooperate with each other.

The second module 12 further includes:
the second interface 121, connected to an input end of a power supply unit 122, where an output end of the power supply unit 122 is configured to connect to an electric energy input end of an external device.

The first module 11 further includes:
the first interface 111, connected to an input end of a charging unit 112 by using a first switch K1, where an output end of the charging unit 112 is connected to an input end of a power source unit 113; an output end of the power source unit 113 is connected to the first interface by using a second switch K2; and an input end of a detection control unit 114 is connected to the first interface 111, a first output end is connected to a control end of the first switch K1, and a second output end is connected to a control end of the second switch K2.

The first interface 111 is configured to: connect to an electric energy supply end of an electric energy supply device when the power source unit 113 is charged; and connect to the second interface 121 when power is supplied to the external device.

The charging unit 112 is configured to, when the first switch K1 is closed, receive electric energy supplied by the electric energy supply device, so as to charge the power source unit 113.

The power supply unit 122 is configured to, when the second switch K2 is closed, receive electric energy output by the power source unit 113, so as to supply power to the external device.

The power source unit 113 is configured to: store the electric energy when the first switch K1 is closed; and output the electric energy when the second switch K2 is closed.

The detection control unit 114 is configured to detect a connection status of the first interface 111, and control switch statuses of the first switch K1 and the second switch K2 according to the connection status of the first interface 111.

As shown in FIG. 1, the power supply unit is disposed outside a device and is connected to the first interface by using the second interface only when power needs to be supplied to an external device. The power supply unit receives electric energy output by the power source unit and supplies power to the external device, which reduces heat generated by a main board, thereby alleviating an impact on a temperature of the device and improving performance of the device.

The detection control unit 114 is configured to: control the first switch K1 to be closed and the second switch K2 to be opened when detecting that the first interface 111 is connected to the electric energy supply end of the electric energy supply device; and control the first switch K1 to be opened and the second K2 to be closed when detecting that the first interface 111 is connected to the second interface 121.

The first switch K1 and the second switch K2 may be implemented separately by using single-pole single-throw switches, or may be implemented by using a single-pole double-throw switch, or may be implemented separately by using field-effect transistors. Control ends of the first switch K1 and the second switch K2 are grid electrodes of the field-effect transistors. In such a case, the detection control unit 114 may control over opening or closing of the field-effect transistor by outputting a corresponding driving signal to the grid electrode of the field-effect transistor.

The first interface and the second interface are implemented by using USB interfaces. One interface serves as a USB slot, and the other interface serves as a USB plug, so as to implement detachable connection.

The detection control unit 114 implements detection on the connection status of the first interface 111 by detecting a level of an ID pin of the first interface 111. When the level of the ID pin is a high level, it indicates that the power source unit is charged, and when the level of the ID pin is a low level, it indicates that the power source unit supplies power to the external device. Accordingly, in a practical application, corresponding levels of an ID pin may be output in two different application environments, so that the detection control unit 114 can detect a corresponding level, control a corresponding switch to be closed, and implement a charging or discharging function. Accordingly, the detection control unit 114 is configured to: detect the level of the ID pin of the first interface 111; control the first switch K1 to be closed and the switch K2 to be opened when the level of the ID pin is a high level; and control the first switch K1 to be opened and the second switch K2 to be closed when the level of the ID pin is a low level.

In a practical application, the first module 11 may be disposed on a PCB board of a device, and the second module may be disposed in a cable or a board outside the device.

The charging unit and the power supply unit are no longer disposed on a main board of a same device. Therefore, difficulty in laying out the main board is reduced. In addition, an area of the main board of the device may also be decreased, thereby decreasing a size of the device.

In addition, the power supply unit is disposed outside the device, and therefore, a heat source that generates heat on the main board of the device is reduced and heat generated by the main board is reduced, a service life of the main board is extended, and amplitude of temperature increase of the device is reduced.

Moreover, the power supply unit is not disposed on the main board, which may alleviate an impact of the power supply unit on layout and performance of a radio frequency part on the main board.

In the electric energy control apparatus according to the embodiment of the present invention, the first module 11 and the second module 12 may separately exist.

An embodiment of the present invention further provides an electric energy control module. Implementation of the electric energy control module is the same as a structure of the first module shown in FIG 1. However, for the electric energy control module, a first interface is configured to connect to an electric energy supply end of an electric energy supply device when a power source unit is charged, and when power is supplied to an external device, connect to an electric energy input end of a power supply unit that supplies power to the external device, where the power supply unit is located outside the electric energy control module and the electric energy input end herein may be implemented by using the second interface. For implementation of the electric energy control module in this embodiment of the present invention, reference may be made to the foregoing description of the first module, which is not described herein again.

The electric energy control module may be disposed on a certain device that needs to be charged and supply power to an external device, such as a portable terminal.

Also described is a power supply module. Implementation of the power supply module is the same as a structure of the second module shown in FIG. 1, which includes:
a second interface 121, where the second interface 121 is a detachably connected interface; and the second interface 121 is configured to connect to an electric energy output interface of an electric energy output device that can output electric energy, where the electric energy output device herein may be a device in which the foregoing electric energy control module is located, and is used together with the electric energy control module; or the electric energy output device may be another device that can output electric energy, and in such a case, it is required that the electric energy output interface of the electric energy output device can be used together with the second interface to implement transmission of electric energy from the electric energy output device to the power supply module.

The second interface 121 is connected to an input end of a power supply unit 122; and an output end of the power supply unit 122 is configured to connect to an electric energy input end of an external device.

The power supply unit 122 is configured to receive electric energy through the second interface 121, so as to supply power to the external device.

The power supply module is disposed in a cable or a board outside the electric energy output device.

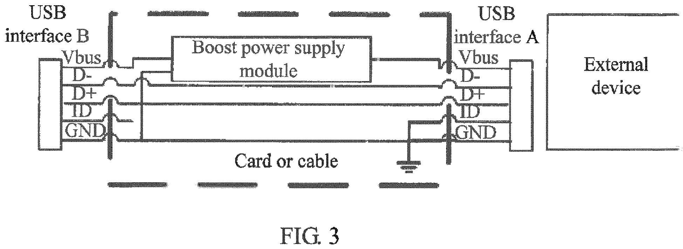

In addition, specific implementation structures of the charging unit and the power supply unit are not limited, as long as functions of charging the power source unit and supplying power to the external device can be implemented. For a purpose of clarity, the following FIG. 2 and FIG. 3 illustrate specific implementation structures of a charging unit and a power supply unit, respectively.

FIG. 2 is a schematic diagram of an implementation structure of a first module according to an embodiment of the present invention, as shown in FIG. 2, which includes:

The first module may be implemented by using a board, where a USB port shown in FIG 2 is a standard 5-wire USB interface, may externally connect to a standard USB cable, and may be used for data communications by connecting to a standard PC or the like. Two field-effect transistors, namely a first field-effect transistor Q1 and a second field-effect transistor Q2, are used on the board to perform separation and switching on a circuit of a power source of the USB port, where the first field-effect transistor Q1 and the second field-effect transistor Q2 correspond to the first switch and the second switch. The control permission of switching is determined by a main chip of the board and the main chip corresponds to the detection control unit. After startup, the main chip tacitly approves that the first field-effect transistor Q1 is connected and the second field-effect transistor Q2 is disconnected, and tacitly approves that a charging unit is connected. The charging unit charges a power source unit, so that the charging unit supplies a system voltage to the first switch, the second switch, and other modules such as an RF module and a WIFI module on the board, to ensure system security. When an external cable is inserted, the main chip detects a level of an ID pin of an inserted signal, and according to a USB protocol, if the level of the ID pin is a low level, enters an OTG mode, in which the first field-effect transistor Q1 is disconnected, the second field-effect transistor Q2 is connected, and the system voltage is connected to an external board through a USB port on the board; and if the level of the ID pin is high, an original mode is maintained, in which power is externally obtained and the charging unit charges the power source unit.

FIG. 3 is a schematic diagram of an implementation structure of a second module provided for better understanding the invention. As shown in FIG. 3, the second module is implemented through a principle of an external connection cable card.

A pin D-/D+ is directly connected without any processing; a pin Vbus is connected to a circuit of a boost power supply module, where the boost power supply module corresponds to the power supply unit and the system voltage of the first module is boosted to a standard 5 V voltage; and a USB port B corresponds to the second interface and connects to another corresponding interface of a device that can communicate with and supply power to an external device, for example, connects to a first interface of a device that includes a first module, whereas an ID signal of a USB port A that is close to the external device is directly grounded and the power supply unit supplies power to the external device through the USB port A. After the power source is transformed by the second module, data communications can be normally performed and a standard 5 V power source can be supplied to another device. The external device can be implemented by using a certain board.

The foregoing descriptions are merely examples. It should be noted that several improvements and polishing may also be made by a person of ordinary skill in the art.

## Claims

1. An electric energy control module (11), comprising:
a first interface (111), wherein the first interface is a detachably connected interface;
the first interface is connected to an input end of a charging unit (112) by using a first switch (K1,Q1);
an output end of the charging unit is connected to an input end of a power source unit (113);
an output end of the power source unit is connected to the first interface by using a second switch (K2, Q2); and an input end of a detection control unit (114) is connected to the first interface, a first output end of the detection control unit is connected to a control end of the first switch and a second output end of the detection control unit is connected to a control end of the second switch;
the first interface is configured to: connect to an electric energy supply end of an electric energy supply device when the power source unit is charged; and when power is supplied to an external device, connect to an electric energy input end of a power supply unit (122) that supplies power to the external device, wherein the power supply unit
is located outside the electric energy control module;
the charging unit is configured to, when the first switch is closed, the second switch is open, receive electric energy supplied by the electric energy supply device, so as to charge the power source unit;
the power source unit is configured to: store the electric energy when the first switch is closed; and output the electric energy when the second switch is closed; and
the detection control unit is configured to detect a connection status of the first interface, and control switch statuses of the first switch and the second switch according to the connection status of the first interface;
**characterized in that**
the first interface is a USB interface; and
the detection control unit is specifically configured to: detect a level of an ID pin of the first interface; control the first switch to be closed and the second switch to be opened when the level of the ID pin is a high level such that when the level of the ID pin is a high level, it indicates that the power source unit is charged; and control the first switch to be opened and the second switch to be closed when the level of the ID pin is a low level such that when the level of the ID pin is a low level, it indicates that the power source unit supplies power to the external device.

2. The module according to claim 1, wherein the electric energy control module is disposed on a PCB board of a device.

3. The module according to claim 1 or 2, wherein the detection control unit is specifically configured to:
control the first switch to be closed and the second switch to be opened when detecting that the first interface is connected to the electric energy supply end of the electric energy supply device; and
control the first switch to be opened and the second switch to be closed when detecting that the first interface is connected to the electric energy input end of the power supply unit.

4. The module according to any one of claims 1 to 3, wherein the first switch and the second switch are implemented separately by using single-pole single-throw switches, or the first switch and the second switch are implemented by using a single-pole double-throw switch, or the first switch and the second switch are implemented separately by using field-effect transistors.

5. An electric energy control apparatus, comprising: a first module (11) and a second module (12),
wherein the first module comprises a first interface (111), the second module comprises a second interface (121), and the first interface and the second interface are detachably connected interfaces that cooperate with each other;
the second module further comprises: the second interface, connected to an input end of a power supply unit (122), wherein an output end of the power supply unit is configured to connect to an electric energy input end of an external device;
the first module further comprises:
the first interface, connected to an input end of a charging unit (112) by using a first switch (K1, Q1),
wherein an output end of the charging unit is connected to an input end of a power source unit (113); an output end of the power source unit is connected to the first interface by using a second switch (K2, Q2);
an input end of a detection control unit (114) is connected to the first interface, a first output end of the detection control unit is connected to a control end of the first switch, and a second output end of the detection control unit is connected to a control end of the second switch;
the first interface is configured to: connect to an electric energy supply end of an electric energy supply device when the power source unit is charged; and connect to the second interface when power is supplied to the external device;
the charging unit is configured to, when the first switch is closed, the second switch is open, receive electric energy supplied by the electric energy supply device, so as to charge the power source unit;
the power supply unit is configured to, when the second switch is closed, receive electric energy output by the power source unit, so as to supply power to the external device;
the power source unit is configured to: store the electric energy when the first switch is closed; and output the electric energy when the second switch is closed; and
the detection control unit is configured to detect a connection status of the first interface, and control switch statuses of the first switch and the second switch according to the connection status of the first interface;
**characterized in that**
the first interface and the second interface are USB interfaces; and
the detection control unit is specifically configured to: detect a level of an ID pin of the first interface; control the first switch to be closed and the second switch to be opened when the level of the ID pin is a high level such that when the level of the ID pin is a high level, it indicates that the power source unit is charged; and control the first switch to be opened and the second switch to be closed when the level of the ID pin is a low level such that when the level of the ID pin is a low level, it indicates that the power source unit supplies power to the external device.

6. The apparatus according to claim 5, wherein the first module is disposed on a PCB board of a device; and
the second module is disposed in a cable or a board outside the device.

7. The apparatus according to claim 5 or 6, wherein the detection control unit is specifically configured to:
control the first switch to be closed and the second switch to be opened when detecting that the first interface is connected to the electric energy supply end of the electric energy supply device; and
control the first switch to be opened and the second switch to be closed when detecting that the first interface is connected to the second interface.

8. The apparatus according to any one of claims 5 to 7, wherein the first switch and the second switch are implemented separately by using single-pole single-throw switches, or the first switch and the second switch are implemented by using a single-pole double-throw switch, or the first switch and the second switch are implemented separately by using field-effect transistors.

## Patentansprüche

1. Elektroenergiesteuermodul (11), umfassend:
eine erste Schnittstelle (111), wobei die erste Schnittstelle eine lösbar angeschlossene Schnittstelle ist;
die erste Schnittstelle unter Verwendung eines ersten Schalters (K1,Q1) an ein Eingangsende einer Ladeeinheit (112) angeschlossen ist;
ein Ausgangsende der Ladeeinheit an ein Eingangsende einer Leistungsquelleneinheit (113) angeschlossen ist;
ein Ausgangsende der Leistungsquelleneinheit unter Verwendung eines zweiten Schalters (K2, Q2) an die erste Schnittstelle angeschlossen ist und ein Eingangsende einer Erkennungssteuereinheit (114) an die erste Schnittstelle angeschlossen ist, ein erstes Ausgangsende der Erkennungssteuereinheit an ein Steuerende des ersten Schalters angeschlossen ist
und ein zweites Ausgangsende der Erkennungssteuereinheit an ein Steuerende des zweiten Schalters angeschlossen ist;
die erste Schnittstelle für Folgendes konfiguriert ist: Anschließen an ein Elektroenergiezufuhrende eines Elektroenergiezufuhrgeräts, wenn die Leistungsquelleneinheit geladen wird; und wenn einem externen Gerät Leistung zugeführt wird, Anschließen an ein Elektroenergieeingangsende einer Leistungszufuhreinheit (122), die dem externen Gerät Leistung zuführt, wobei sich die Leistungszufuhreinheit außerhalb des Elektroenergiesteuermoduls befindet;
wobei die Ladeeinheit dafür konfiguriert ist, Elektroenergie zu empfangen, die durch das Elektroenergiezufuhrgerät zugeführt wird, wenn der erste Schalter geschlossen und der zweite Schalter offen ist, so dass die Leistungsquelleneinheit geladen wird;
wobei die Leistungsquelleneinheit für Folgendes konfiguriert ist: Speichern der Elektroenergie, wenn der erste Schalter geschlossen ist; und Ausgeben der Elektroenergie, wenn der zweite Schalter geschlossen ist; und
wobei die Erkennungssteuereinheit dafür konfiguriert ist, einen Anschlussstatus der ersten Schnittstelle zu erkennen, und gemäß dem Anschlussstatus der ersten Schnittstelle die Schalterstatus des ersten Schalters und des zweiten Schalters zu steuern,
**dadurch gekennzeichnet, dass**
die erste Schnittstelle eine USB-Schnittstelle ist und
die Erkennungssteuereinheit speziell für Folgendes konfiguriert ist: Erkennen eines Pegels eines ID-Pins der ersten Schnittstelle; Steuern des ersten Schalters, geschlossen zu sein, und des zweiten Schalters, geöffnet zu sein, wenn der Pegel des ID-Pins ein hoher Pegel ist, so dass, wenn der Pegel des ID-Pins ein hoher Pegel ist, dies anzeigt, dass die Leistungsquelle geladen wird; und Steuern des ersten Schalters, geöffnet zu sein, und des zweiten Schalters, geschlossen zu sein, wenn der Pegel des ID-Pins ein niedriger Pegel ist, so dass, wenn der Pegel des ID-Pins ein niedriger Pegel ist, dies anzeigt, dass die Leistungsquelleneinheit dem externen Gerät Leistung zuführt.

2. Modul nach Anspruch 1, wobei das Elektroenergiesteuermodul auf einer Leiterplatte eines Geräts angeordnet ist.

3. Modul nach Anspruch 1 oder 2, wobei die Erkennungssteuereinheit speziell für Folgendes konfiguriert ist:
Steuern des ersten Schalters, geschlossen zu sein, und des zweiten Schalters, geöffnet zu sein, wenn erkannt wird, dass die erste Schnittstelle an das Elektroenergiezufuhrende des Elektroenergiezufuhrgeräts angeschlossen ist; und
Steuern des ersten Schalters, geöffnet zu sein, und des zweiten Schalters, geschlossen zu sein, wenn erkannt wird, dass die erste Schnittstelle an das Elektroenergieeingangsende der Leistungszufuhreinheit angeschlossen ist.

4. Modul nach einem der Ansprüche 1 bis 3, wobei der erste Schalter und der zweite Schalter unter Verwendung von einpoligen Ein-/Ausschaltern separat umgesetzt sind oder der erste Schalter und der zweite Schalter unter Verwendung eines zweipoligen Umschalters umgesetzt sind oder der erste Schalter und der zweite Schalter unter Verwendung von Feldeffekttransistoren getrennt umgesetzt sind.

5. Elektroenergiesteuervorrichtung, umfassend:
ein erstes Modul (11) und ein zweites Modul (12), wobei das erste Modul eine erste Schnittstelle (111) umfasst, das zweite Modul eine zweite Schnittstelle (121) umfasst, und die erste Schnittstelle und die zweite Schnittstelle lösbar angeschlossene Schnittstellen sind, die zusammenarbeiten;
wobei das zweite Modul ferner Folgendes umfasst: die zweite Schnittstelle, die an ein Eingangsende einer Leistungszufuhreinheit (122) angeschlossen ist, wobei ein Ausgangsende der Leistungszufuhreinheit dafür konfiguriert ist, an ein Elektroenergieeingangsende eines externen Geräts angeschlossen zu sein;
wobei das erste Modul ferner Folgendes umfasst:
die erste Schnittstelle, die unter Verwendung eines ersten Schalters (K1, Q1) an ein Eingangsende einer Ladeeinheit (112) angeschlossen ist, wobei ein Ausgangsende der Ladeeinheit an ein Eingangsende einer Leistungsquelleneinheit (113) angeschlossen ist; ein Ausgangsende der Leistungsquelleneinheit unter Verwendung eines zweiten Schalters (K2, Q2) an die erste Schnittstelle angeschlossen ist; ein Eingangsende einer Erkennungssteuereinheit (114) an die erste Schnittstelle angeschlossen ist, ein erstes Ausgangsende der Erkennungssteuereinheit an ein Steuerende des ersten Schalters angeschlossen ist und ein zweites Ausgangsende der Erkennungssteuereinheit an ein Steuerende des zweiten Schalters angeschlossen ist;
wobei die erste Schnittstelle für Folgendes konfiguriert ist: Anschließen an ein Elektroenergiezufuhrende eines Elektroenergiezufuhrgeräts, wenn die Leistungsquelleneinheit geladen wird, und Anschließen an die zweite Schnittstelle, wenn dem externen Gerät Leistung zugeführt wird,
wobei die Ladeeinheit dafür konfiguriert ist, Elektroenergie zu empfangen, die durch das Elektroenergiezufuhrgerät zugeführt wird, wenn der erste Schalter geschlossen und der zweite Schalter offen ist, so dass die Leistungsquelleneinheit geladen wird;
wobei die Leistungszufuhreinheit dafür konfiguriert ist, wenn der zweite Schalter geschlossen ist, Elektroenergie zu empfangen, die durch die Leistungsquelleneinheit ausgegeben wird, so dass dem externen Gerät Leistung zugeführt wird;
wobei die Leistungsquelleneinheit für Folgendes konfiguriert ist: Speichern der Elektroenergie, wenn der erste Schalter geschlossen ist; und Ausgeben der Elektroenergie, wenn der zweite Schalter geschlossen ist; und
die Erkennungssteuereinheit dafür konfiguriert ist, einen Anschlussstatus der ersten Schnittstelle zu erkennen, und gemäß dem Anschlussstatus der ersten Schnittstelle die Schalterstatus des ersten Schalters und des zweiten Schalters zu steuern,
**dadurch gekennzeichnet, dass**
die erste Schnittstelle und die zweite Schnittstelle USB-Schnittstellen sind und
die Erkennungssteuereinheit speziell für Folgendes konfiguriert ist: Erkennen eines Pegels eines ID-Pins der ersten Schnittstelle; Steuern des ersten Schalters, geschlossen zu sein, und des zweiten Schalters, geöffnet zu sein, wenn der Pegel des ID-Pins ein hoher Pegel ist, so dass, wenn der Pegel des ID-Pins ein hoher Pegel ist, dies anzeigt, dass die Leistungsquelle geladen wird; und Steuern des ersten Schalters, geöffnet zu sein, und des zweiten Schalters, geschlossen zu sein, wenn der Pegel des ID-Pins ein niedriger Pegel ist, so dass, wenn der Pegel des ID-Pins ein niedriger Pegel ist, dies anzeigt, dass die Leistungsquelleneinheit dem externen Gerät Leistung zuführt.

6. Vorrichtung nach Anspruch 5, wobei das erste Modul auf einer Leiterplatte eines Geräts angeordnet ist und das zweite Modul in einem Kabel oder einer Platte außerhalb des Geräts angeordnet ist.

7. Vorrichtung nach Anspruch 5 oder 6, wobei die Erkennungssteuereinheit speziell für Folgendes konfiguriert ist:
Steuern des ersten Schalters, geschlossen zu sein, und des zweiten Schalters, geöffnet zu sein, wenn erkannt wird, dass die erste Schnittstelle an das Elektroenergiezufuhrende des Elektroenergiezufuhrgeräts angeschlossen ist; und
Steuern des ersten Schalters, geöffnet zu sein, und des zweiten Schalters, geschlossen zu sein, wenn erkannt wird, dass die erste Schnittstelle an die zweite Schnittstelle angeschlossen ist.

8. Vorrichtung nach einem der Ansprüche 5 bis 7, wobei der erste Schalter und der zweite Schalter unter Verwendung von einpoligen Ein-/Ausschaltern separat umgesetzt sind oder der erste Schalter und der zweite Schalter unter Verwendung eines zweipoligen Umschalters umgesetzt sind oder der erste Schalter und der zweite Schalter unter Verwendung von Feldeffekttransistoren getrennt umgesetzt sind.

## Revendications

1. Module de commande d'énergie électrique (11), comprenant :
une première interface (111), dans lequel la première interface est une interface connectée de manière détachable ;
la première interface est connectée à une extrémité d'entrée d'une unité de charge (112) à l'aide d'un premier commutateur (K1, Q1) ;
une extrémité de sortie de l'unité de charge est connectée à une extrémité d'entrée d'une unité de source d'alimentation (113) ;
une extrémité de sortie de l'unité de source d'alimentation est connectée à la première interface à l'aide d'un second commutateur (K2, Q2) ; et une extrémité d'entrée d'une unité de commande de détection (114) est connectée à la première interface, une première extrémité de sortie de l'unité de commande de détection est connectée à une extrémité de commande du premier commutateur et une seconde extrémité de sortie de l'unité de commande de détection est connectée à une extrémité de commande du second commutateur ;
la première interface est configurée pour : se connecter à une extrémité d'alimentation d'énergie électrique d'un dispositif d'alimentation d'énergie électrique quand l'unité de source d'alimentation est chargée ; et quand une alimentation est fournie à un dispositif externe, se connecter à une extrémité d'entrée d'énergie électrique d'une unité d'alimentation électrique (122) qui fournit une alimentation électrique au dispositif externe, l'unité d'alimentation électrique étant située en dehors du module de commande d'énergie électrique ;
l'unité de charge est configurée pour, quand le premier commutateur est fermé, le second commutateur est ouvert, recevoir une énergie électrique fournie par le dispositif d'alimentation d'énergie électrique, de manière à charger l'unité de source d'alimentation ;
l'unité de source d'alimentation est configurée pour : stocker l'énergie électrique quand le premier commutateur est fermé ; et délivrer l'énergie électrique quand le second commutateur est fermé ; et
l'unité de commande de détection est configurée pour détecter un état de connexion de la première interface, et commander des états de commutation du premier commutateur et du second commutateur en fonction de l'état de connexion de la première interface ;
**caractérisé en ce que**
la première interface est une interface USB ; et
l'unité de commande de détection est configurée spécifiquement pour : détecter un niveau d'une broche ID de la première interface, commander la fermeture du premier commutateur et l'ouverture du second commutateur quand le niveau de la broche ID est un niveau haut de telle sorte qu'un niveau haut de la broche ID indique que l'unité de source d'alimentation est chargée ; et commander l'ouverture du premier commutateur et la fermeture du second commutateur quand le niveau de la broche ID est un niveau bas de telle sorte qu'un niveau bas de la broche ID indique que l'unité de source d'alimentation fournit une alimentation électrique au dispositif externe.

2. Module selon la revendication 1, dans lequel le module de commande d'énergie électrique est disposé sur une carte de circuit imprimé d'un dispositif.

3. Module selon la revendication 1 ou 2, dans lequel l'unité de commande de détection est configurée spécifiquement pour :
commander la fermeture du premier commutateur et l'ouverture du second commutateur à la détection que la première interface est connectée à l'extrémité d'alimentation d'énergie électrique du dispositif d'alimentation d'énergie électrique ; et
commander l'ouverture du premier commutateur et la fermeture du second commutateur à la détection que la première interface est connectée à l'extrémité d'entrée d'énergie électrique de l'unité d'alimentation électrique.

4. Module selon l'une quelconque des revendications 1 à 3, dans lequel le premier commutateur et le second commutateur sont mis en œuvre séparément à l'aide de commutateurs unipolaires unidirectionnels, ou le premier commutateur et le second commutateur sont mis en œuvre à l'aide d'un commutateur unipolaire bidirectionnel ou le premier commutateur et le second commutateur sont mis en œuvre séparément à l'aide de transistors à effet de champ.

5. Appareil de commande d'énergie électrique, comprenant : un premier module (11) et un second module (12),
dans lequel le premier module comprend une première interface (111), le second module comprend une seconde interface (121), et la première interface et la seconde interface sont des interfaces connectées de manière détachable qui coopèrent l'une avec l'autre ;
le second module comprend en outre la seconde interface, connectée à une extrémité d'entrée d'une unité d'alimentation électrique (122),
dans lequel une extrémité de sortie de l'unité d'alimentation électrique est configurée pour se connecter à une extrémité d'entrée d'énergie électrique d'un dispositif externe
le premier module comprend en outre :
la première interface, connectée à une extrémité d'entrée d'une unité de charge (112) à l'aide d'un premier commutateur (K1, Q1),
dans lequel une extrémité de sortie de l'unité de charge est connectée à une extrémité d'entrée d'une unité de source d'alimentation (113) ;
une extrémité de sortie de l'unité de source d'alimentation est connectée à la première interface à l'aide d'un second commutateur (K2, Q2) ;
une extrémité d'entrée d'une unité de commande de détection (114) est connectée à la première interface, une première extrémité de sortie de l'unité de commande de détection est connectée à une extrémité de commande du premier commutateur, et une seconde extrémité de sortie de l'unité de commande de détection est connectée à une extrémité de commande du second commutateur ;
la première interface est configurée pour : se connecter à une extrémité d'alimentation d'énergie électrique d'un dispositif d'alimentation d'énergie électrique quand l'unité de source d'alimentation est chargée ; et se connecter à la seconde interface quand une alimentation électrique est fournie au dispositif externe ;
l'unité de charge est configurée pour, quand le premier commutateur est fermé, le second commutateur est ouvert, recevoir une énergie électrique fournie par le dispositif d'alimentation d'énergie électrique, de manière à charger l'unité de source d'alimentation ;
l'unité d'alimentation électrique est configurée pour, quand le second commutateur est fermé, recevoir une énergie électrique délivrée par l'unité de source d'alimentation, de manière à fournir une alimentation électrique au dispositif externe ;
l'unité de source d'alimentation est configurée pour : stocker l'énergie électrique quand le premier commutateur est fermé ; et délivrer l'énergie électrique quand le second commutateur est fermé ; et
l'unité de commande de détection est configurée pour détecter un état de connexion de la première interface, et commander des états de commutation du premier commutateur et du second commutateur en fonction de l'état de connexion de la première interface ;
**caractérisé en ce que**
la première interface et la seconde interface sont des interfaces USB ; et
l'unité de commande de détection est configurée spécifiquement pour : détecter un niveau d'une broche ID de la première interface, commander la fermeture du premier commutateur et l'ouverture du second commutateur quand le niveau de la broche ID est un niveau haut de telle sorte qu'un niveau haut de la broche ID indique que l'unité de source d'alimentation est chargée ; et commander l'ouverture du premier commutateur et la fermeture du second commutateur quand le niveau de la broche ID est un niveau bas de telle sorte qu'un niveau bas de la broche ID indique que l'unité de source d'alimentation fournit une alimentation électrique au dispositif externe.

6. Appareil selon la revendication 5, dans lequel le premier module est disposé sur une carte de circuit imprimé d'un dispositif ; et
le second module est disposé dans un câble ou une carte en dehors du dispositif.

7. Appareil selon la revendication 5 ou 6, dans lequel l'unité de commande de détection est configurée spécifiquement pour
commander la fermeture du premier commutateur et l'ouverture du second commutateur à la détection que la première interface est connectée à l'extrémité d'alimentation d'énergie électrique du dispositif d'alimentation d'énergie électrique ; et commander l'ouverture du premier commutateur et la fermeture du second commutateur à la détection que la première interface est connectée à la seconde interface.

8. Appareil selon l'une quelconque des revendications 5 à 7, dans lequel le premier commutateur et le second commutateur sont mis en œuvre séparément à l'aide de commutateurs unipolaires unidirectionnels, ou le premier commutateur et le second commutateur sont mis en œuvre à l'aide d'un commutateur unipolaire bidirectionnel ou le premier commutateur et le second commutateur sont mis en œuvre séparément à l'aide de transistors à effet de champ.
